(19) Europäisches Patentamt

European Patent Office

Office européen des brevets

(11) **EP 1 478 148 A1**

(12) **EUROPÄISCHE PATENTANMELDUNG**

(43) Veröffentlichungstag:
**17.11.2004 Patentblatt 2004/47**

(51) Int Cl.⁷: **H04L 27/26**

(21) Anmeldenummer: 03010935.9

(22) Anmeldetag: **15.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT 80333 München (DE)**

(72) Erfinder:
- **Costa, Elena, Dr.**
  **85748 Garching (DE)**
- **Eichinger, Josef**
  **85464 Neufinsing (DE)**
- **Schulz, Egon, Dr.**
  **80993 München (DE)**
- **Weckerle, Martin**
  **89134 Blaustein (DE)**

(54) **Drahtloses Mehrträgerkommunikationsverfahren mit dynamischer Aufteilung der Frequenzbreite und Anzahl der Subbänder**

(57)    Die Erfindung betrifft ein Verfahren zur Kommunikation zwischen Funkstationen eines Funkkommunikationssystems unter Verwendung von mindestens einem in eine Anzahl von Subbändern (SB1, SB2, SBN) aufgeteilten Frequenzband. Erfindungsgemäß variiert die Art der Aufteilung des mindestens einen Frequenzbandes in Subbänder (SB1, SB2, SBN) mit der Zeit. Weiterhin betrifft die Erfindung eine Einrichtung zur Aufteilung eines Frequenzbandes in Subbänder, sowie eine Einrichtung zum Versenden und eine Einrichtung zum Empfangen von Daten gemäß dem erfindungsgemäßen Verfahren.

FIG 3

EP 1 478 148 A1

**Beschreibung**

Die Erfindung betrifft ein Verfahren zur Kommunikation zwischen Funkstationen eines Funkkommunikationssystems unter Verwendung von mindestens einem in eine Anzahl von Subbändern aufgeteilten Frequenzband und ein Verfahren zur Übertragung von Daten zwischen einem Sender und einem Empfänger in einem Funkkommunikationssystem, wobei die Daten auf einer Anzahl von Subbändern eines in Subbänder aufgeteilten Frequenzbandes übertragen werden.

Weiterhin betrifft die Erfindung eine Einrichtung in einem Funkkommunikationssystem zur Festlegung der Aufteilung eines Frequenzbandes in Subbänder, sowie eine Einrichtung zur Versendung von Daten und eine Einrichtung zum Empfangen von Daten in einem Funkkommunikationssystem.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Funkstation übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem kann hierbei Funkstationen wie Teilnehmerstationen, z.B. Mobilstationen, und Basisstationen, z.B. Node B's oder andere Funkzugangseinrichtungen, sowie gegebenenfalls weitere netzseitige Einrichtungen umfassen.

Der Zugriff von Funkstationen auf die gemeinsamen Funkressourcen des Übertragungsmediums, wie zum Beispiel Zeit, Raum, Frequenz, Code, Leistung wird bei Funkkommunikationssystemen durch Vielfachzugriffsverfahren (Multiple Access, MA) geregelt.

Um eine möglichst effiziente Übertragung von Daten zu gewährleisten, zerlegt man das gesamte zur Verfügung stehende Frequenzband in mehrere Subbänder (Mehrträgerverfahren). Die den Mehrträgersystemen zugrunde liegende Idee ist es, das Ausgangsproblem der Übertragung eines breitbandigen Signals in die Übertragung einer Menge von schmalbandigen Signalen zu überführen. Dies hat u.a. den Vorteil, dass die am Empfänger erforderliche Komplexität reduziert werden kann. Ferner ermöglicht die Aufteilung der verfügbaren Bandbreite in mehrere schmalbandige Subbänder eine deutlich höhere Granularität der Datenübertragung hinsichtlich der Verteilung der zu übertragenden Daten auf die unterschiedlichen Subbänder, d. h., die Funkressourcen können mit einer großen Feinheit auf die zu übertragenden Daten bzw. auf die Empfänger verteilt werden. Insbesondere bei Übertragungen mit variabler Datenrate oder bei burstartigem Datenverkehr kann die verfügbare Bandbreite durch die Zuordnung einer Anzahl von Subbändern zu unterschiedlichen Empfängern effizient ausgenutzt werden.

Bei OFDM (Orthogonal Frequency Division Multiplexing) werden für die Subbänder zeitlich annähernd rechteckige Pulsformen verwendet. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen. Somit sind die Subbänder orthogonal zueinander. Eine spektrale Überlappung der Subbänder und daraus resultierend eine hohe Packungsdichte der Subbänder ist erlaubt, da die Orthogonalität eine Unterscheidbarkeit der einzelnen Subbänder sicherstellt. Daher wird eine bessere spektrale Effizienz als bei dem einfachen FDM (Frequency Division Multiplexing), bei dem die Orthogonalitätsbedingung der Subbänder nicht berücksichtigt wird und deshalb zur Vermeidung von möglichen Interferenzen zwischen den einzelnen Subbändern, welche die Übertragungsqualität negativ beeinflussen, größere Subbandabstände erforderlich sind, erreicht. Durch den meist sehr geringen Abstand der Subbänder und der Schmalbandigkeit der auf den einzelnen Subbändern übertragenen Signale bei OFDM soll gewährleistet werden, dass die Übertragung innerhalb der einzelnen Subbänder im allgemeinen nicht frequenzselektiv ist. Dies vereinfacht am Empfänger die Signalentzerrung.

Von Nachteil bei OFDM-Systemen ist ihre hohe Empfindlichkeit gegenüber mangelhafter Zeit- und Frequenzsynchronisation, sowie gegenüber durch Bewegungen von Funkstationen hervorgerufene Dopplereffekte. Diese ungünstigen Erscheinungen machen sich v.a. in der Aufwärtsrichtung, d.h. bei Datenübertragungen von teilnehmerseitigen Funkstationen zu einer netzseitigen Einrichtung, bemerkbar, wobei die Daten von unterschiedlichen teilnehmerseitigen Funkstationen im Sinne von FDMA (Frequency Division Multiple Access) auf unterschiedliche Subbänder verteilt sind. In diesem Fall können die oben genannten Effekte Interferenzen zwischen den Subbändern und damit auch zwischen den verschiedenen übertragenden teilnehmerseitigen Funkstationen hervorrufen.

Der Erfindung liegt die Aufgabe zugrunde, ein effektives, gegenüber herkömmlichen Mehrträger-Verfahren verbessertes, Verfahren zur Kommunikation in einem Mehrträgerfunkkommunikationssystem aufzuzeigen, sowie eine netzseitige Einrichtung zur Unterstützung des Verfahrens und einen Sender und einen Empfänger zur Durchführung des Verfahrens.

Diese Aufgabe wird hinsichtlich des Verfahrens gelöst durch ein Verfahren mit den Merkmalen des Anspruchs 1.

Vorteilhafte Ausgestaltungen und Weiterbildungen sind Gegenstand von Unteransprüchen.

In dem Verfahren zur Kommunikation zwischen Funkstationen eines Funkkommunikationssystems unter Verwendung von mindestens einem in eine Anzahl von Subbändern aufgeteilten Frequenzband variiert erfindungsgemäß die Art der Aufteilung des mindestens einen Frequenzbandes in Subbänder mit der Zeit.

Bei dem Funkkommunikationssystem handelt es sich gemäß der Verwendung eines in eine Anzahl von Subbändern aufgeteilten Frequenzbandes um ein Mehrträgersystem, wobei die zeitweilige Aufteilung des Frequenzbandes in lediglich ein Subband möglich ist; bei den kommunizierenden Funkstationen kann es sich z.B. um Mobilstationen und Basisstationen handeln, die Kommunikation kann sowohl die Aufwärts- als auch die Abwärtsrichtung betreffen. Vorzugsweise wird das Verfahren in einer oder in mehreren Funkzellen des Funkkommunikationssystems eingesetzt. Die Aufteilung eines Frequenzbandes in Subbänder ist nicht konstant, wie es z.B. bei einer durch die Funknetzplanung vorgegebenen Aufteilung der Fall ist, sondern wird mit der Zeit geändert. Die zeitliche Änderung findet in der Regel nicht kontinuierlich, sondern als Reaktion auf geänderte Bedingungen innerhalb der Funkzelle statt. Variationen der Aufteilung können sowohl während einer Kommunikation zwischen zwei Funkstationen stattfinden, als auch nach Beendigung dieser und vor Beginn einer weiteren Kommunikation. Änderungen der Aufteilung in Subträger können insbesondere durch eine geeignete netzseitige Einrichtung entschieden und angeordnet werden.

In Weiterbildung der Erfindung betrifft die Variation die Anzahl der Subbänder des Frequenzbandes und/oder die Frequenzbreite von mindestens zwei Subbändern. Bei äquidistanten Subbändern beinhaltet eine Änderung der Anzahl der Subbänder automatisch auch die Frequenzbreite aller Subbänder. Jedoch ist auch eine Änderung der Frequenzbreite von manchen oder allen Subbändern möglich, ohne dass die Gesamtanzahl der Subbänder geändert wird. Im allgemeinen sind jegliche Veränderungen einer vorgenommenen Aufteilung in Subbänder anwendbar.

Vorteilhafterweise können zur Datenübertragung auf Subbändern verwendeten Filterfunktionen zusätzlich zur Variation der Art der Aufteilung in Subbänder mit der Zeit variieren. Eine Filterfunktion ist hierbei ein Filter im Frequenz- bzw. - erhältlich durch eine Fouriertransformation- im Zeitbereich. Die Variation von Filterfunktionen betrifft mindestens eine von einem Sender verwendete Filterfunktion, kann aber auch mehrere, von mehreren Sendern verwendete Filterfunktionen betreffen. Z.B. ist es möglich, dass alle Filterfunktionen von Subbändern, welche von einer Variation der Art der Aufteilung betroffen sind, geändert werden. Unter einer Variation einer Filterfunktion ist insbesondere eine Anpassung an die geänderte Aufteilung des Frequenzbandes zu verstehen, die Bandbreite einer Filterfunktion kann durch eine Änderung der Abtastrate eines Datenstroms variiert werden. Besonders aufwandgünstig ist es, wenn die Bandbreite aller Filterfunktionen und damit die Überlappung benachbarter Subbänder durch die Wahl der Abtastrate eines Datenstroms im gleichen Maße variiert werden.

Weiterhin besteht eine aufwandsgünstige Implementierung in der Verwendung der gleichen Filterfunktion pro Subband.

Es ist möglich, dass sich zumindest zeitweise mindestens zwei auf Subbändern verwendete Filterfunktionen voneinander unterscheiden. Hierdurch können Filterfunktionen unabhängig voneinander geändert werden, wodurch eine effiziente Nutzung der knappen Funkressourcen in Verbindung mit einer relativ geringen Komplexität der Filterimplementierung durch die Wahl von geeigneten Filtern erreicht werden kann.

In einer Ausgestaltung der Erfindung erfolgt die Variation der Art der Aufteilung und gegebenenfalls auch die Variation von Filterfunktionen in Abhängigkeit von Funkkanaleigenschaften, wie z.B. durch Mehrwegeausbreitung hervorgerufenen Effekte, und/oder von Parametern von mindestens einer Funkstation, wie z.B. von dem Mobilitätsgrad einer sendenden Funkstation, und/oder von der erwünschten Granularität einer Datenübertragung. Eine hohe Granularität ist z.B. dann erwünscht bzw. erforderlich, wenn eine große Anzahl an Funkstationen gleichzeitig kommunizieren wollen, so dass eine große Anzahl an Subbändern von Vorteil ist. Eine hohe Granularität erfordert eine feine Unterteilung der zur Verfügung stehenden Funkressourcen in Subbänder. Die erwünschte Granularität wird beeinflusst z. B. durch die Anzahl der kommunizierenden Funkstationen und Eigenschaften der zu übertragenden Daten.

Die oben genannte Aufgabe hinsichtlich des Verfahrens wird weiterhin durch ein Verfahren mit den Merkmalen des Anspruchs 7 gelöst.

In dem Verfahren zur Übertragung von Daten zwischen einem Sender und einem Empfänger in einem Funkkommunikationssystem, wobei die Daten auf einer Anzahl von Subbändern eines in Subbänder aufgeteilten Frequenzbandes übertragen werden, variiert erfindungsgemäß die senderseitig zur Übertragung verwendete Frequenzbreite von mindestens einem Subband der Anzahl von Subbändern und gegebenenfalls zusätzlich die Anzahl der Subbänder während der Übertragung der Daten.

Betrachtet wird hierbei der Übertragungsvorgang einer Datenmenge zwischen einem Sender und einem Empfänger. Während dieser Übertragung sind die hierzu senderseitig verwendeten Funkressourcen in Form der Subbänder zeitlich nicht konstant. So ist es z. B. möglich, dass ein erstes Bit auf einem ersten Subband mit einer ersten Frequenzbreite und ein zeitlich darauffolgend gesendetes zweites Bit auf einem zweiten Subband mit einer zweiten Frequenzbreite, welche sich von der ersten unterscheidet, gesendet wird. Die Frequenzlage des Zentrums des zweiten Subbandes kann hierbei mit demjenigen des ersten Subbandes übereinstimmen oder gegen dieses verschoben sein.

Die oben genannte Aufgabe wird hinsichtlich der Einrichtung in einem Funkkommunikationssystem durch eine Einrichtung mit den Merkmalen des Anspruchs 8 gelöst.

Die erfindungsgemäße Einrichtung in einem Funkkommunikationssystem weist Mittel zur Festlegung der Aufteilung von mindestens einem zur Kommunikation zwischen Funkstationen verwendeten Frequenzband in Subbänder derart auf, dass die Art der Aufteilung des Frequenzbandes in Subbänder mit der Zeit variiert.

Die Einrichtung ist geeignet zur Durchführung von oben beschriebenen Verfahrensschritten gemäß dem Verfahren zur Kommunikation zwischen Funkstationen und kann hierfür weitere Mittel aufweisen. Die Einrichtung kann baulich verbunden sein mit anderen netzseitigen Einrichtungen, wie z.B. Basisstationen oder Einrichtungen zur Funkzugangskontrolle. Vorzugsweise wird die Festlegung der Aufteilung von der Einrichtung für genau eine oder auch für mehrere Funkzellen des Funkkommunikationssystems durchgeführt.

Die oben genannte Aufgabe wird hinsichtlich der Einrichtung zur Versendung von Daten durch eine Einrichtung mit den Merkmalen des Anspruchs 9 gelöst.

Die Einrichtung zur Versendung von Daten in einem Funkkommunikationssystem weist Mittel zum Versenden von Daten auf einer Anzahl von Subbändern eines in Subbänder aufgeteilten Frequenzbandes auf. Die Mittel sind derart ausgestaltet, dass die von der Einrichtung verwendete Frequenzbreite von mindestens einem Subband der Anzahl von Subbändern und gegebenenfalls zusätzlich die Anzahl der verwendeten Subbänder mit der Zeit variiert. Die Variation kann hierbei sowohl während der Versendung von Daten zu einem Empfänger als auch zwischen verschiedenen Versendungen von Daten stattfinden.

Die oben genannte Aufgabe wird hinsichtlich der Einrichtung zum Empfangen von Daten durch eine Einrichtung mit den Merkmalen des Anspruchs 10 gelöst.

Die Einrichtung zum Empfangen von Daten in einem Funkkommunikationssystem weist Mittel zum Empfangen von auf einer gegebenenfalls zeitlich variierenden Anzahl von Subbändern mit zumindest teilweise mit der Zeit variierender Frequenzbreite eines in Subbänder aufgeteilten Frequenzbandes übertragenen Daten auf.

Im folgenden wird die Erfindung anhand eines Ausführungsbeispiels näher erläutert. Dabei zeigen

Figur 1:    einen Ausschnitt aus einer Funkzelle eines Funkkommunikationssystems,

Figur 2:    ein in Subbänder aufgeteiltes Frequenzband,

Figur 3:    eine senderseitige Anordnung zur Verfahrensdurchführung.

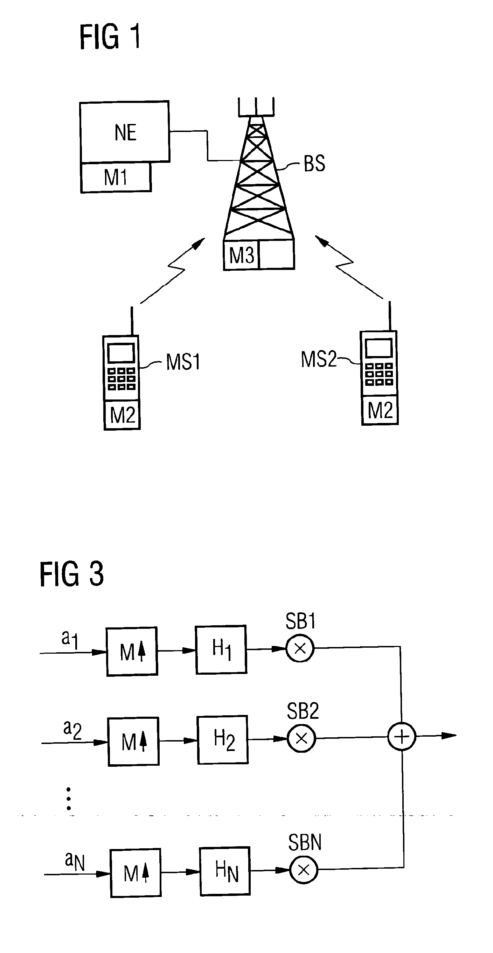

Figur 1 zeigt eine Funkzelle eines Funkkommunikationssystems, welche eine Basisstation BS und zwei Mobilstationen MS1 und MS2 umfasst. Die Basisstation BS ist mit einer netzseitigen Einrichtung NE verbunden, wobei diese Verbindung auch über mehrere andere Einrichtungen hergestellt sein kann. Weiterhin ist es auch möglich, dass die netzseitige Einrichtung NE einen Teil der Basisstation BS darstellt.

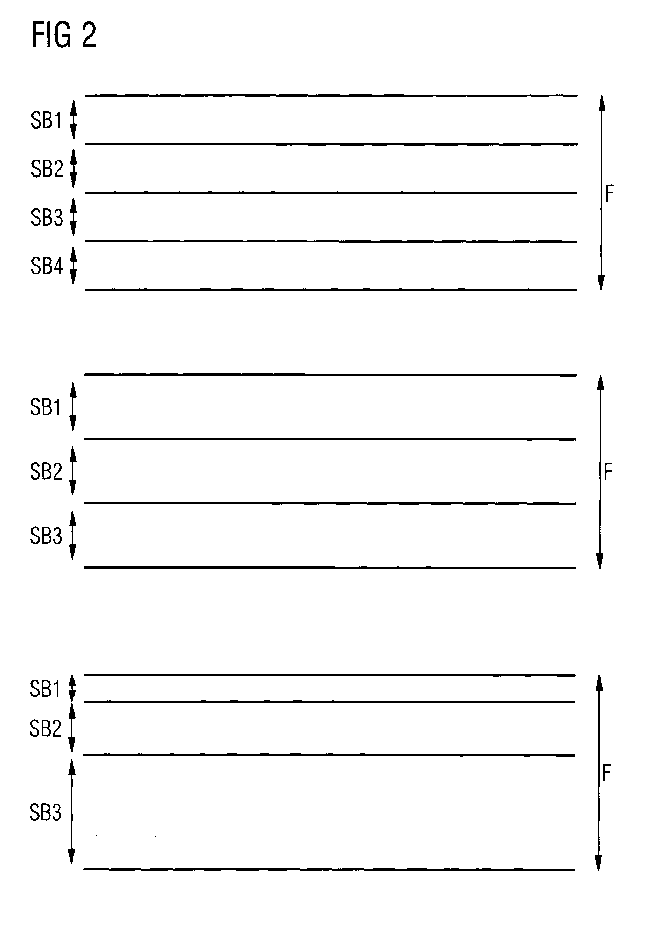

Im folgenden soll die Datenübertragung per Funk zwischen den beiden Mobilstationen MS1 und MS2 und der Basisstation BS betrachtet werden. Hierzu steht in der Funkzelle ein Frequenzband F zur Verfügung, welches in Figur 2 dargestellt ist. Bei dem Frequenzband kann es sich z.B. um das Band für die Aufwärtsrichtung eines FDMA-Systems handeln. Dieses Frequenzband ist in Subbänder aufgeteilt. Die Verwendung von schmalbandigen Subbändern weist den Vorteil auf, dass diese Subbänder eine geringere Frequenzselektivität besitzen als das breite Frequenzband F. Diese Frequenzselektivität kommt zustande durch Mehrwegeausbreitung von Signalen zwischen Sender und Empfänger. Trotz dieser Frequenzselektivität über dem gesamten Frequenzband F kann bei geeigneter Wahl der Breite der Subbänder erreicht werden, dass die einzelnen Übertragungskanäle auf den Subbändern nicht frequenzselektiv sind, d.h. eine konstante Übertragungsfunktion aufweisen. Je schmaler ein Subband ist, desto größer ist die Wahrscheinlichkeit, dass die Übertragungsfunktion des Subbandes im Frequenzbereich konstant ist. Der Aufwand an Entzerrungen, welche der Empfänger in der Regel aufgrund der Mehrwegeausbreitung durchführen muss, kann somit durch eine geeignete Wahl der Subbandbreiten wesentlich reduziert werden.

Bewegen sich die beiden Mobilstationen MS1 und MS2 während der Versendung von Funksignalen, so kommt es jeweils zu einer Frequenzverschiebung aufgrund des Dopplereffektes. Dies kann zur Folge haben, dass verschiedene - ohne den Dopplereffekt getrennte - Subbänder überlappen und somit die Signale dieser Subbänder interferieren (ICI, Inter Carrier Interference). Hierdurch lassen sich die auf verschiedenen Subbändern übertragenen Symbole nicht mehr eindeutig im Empfänger unterscheiden bzw. der Empfang der auf den verschiedenen Subbändern übertragenen Symbole wird durch gegenseitige Interferenz gestört. Um derartige Störungen aufgrund des Dopplereffektes bei bewegten Mobilstationen MS1 und MS2 zu verringern, ist es vorteilhaft, möglichst breitbandige Subbänder zu verwenden.

Erfindungsgemäß wird die Art der Aufteilung des Frequenzbandes F in Subbänder mit der Zeit variiert. Figur 2 zeigt drei verschiedene Arten der Aufteilung des Frequenzbandes F in Subbänder. In der oberen Darstellung der Figur 2 ist das Frequenzband F in vier gleich breite Subbänder SB1, SB2, SB3 und SB4 aufgeteilt. Diese Subbänder SB1, SB2, SB3 und SB4 werden den Mobilstationen MS1 und MS2 zur Kommunikation mit der Basisstation BS zugewiesen. Beispielsweise kann die Mobilstation MS1 die beiden Subbänder SB1 und SB2 zur Kommunikation verwenden, und die Mobilstation MS2 die beiden Subbänder SB3 und SB4.

Eine weitere Aufteilung des Frequenzbandes F in Subbänder zeigt die mittlere Darstellung der Figur 2. Das Frequenzband F ist hierbei in drei Subbänder SB1, SB2 und SB3 aufgeteilt, welche jeweils die gleiche Frequenzbreite aufweisen. In der unteren Darstellung der Figur 2 ist das Frequenzband F ebenfalls in drei Subbänder SB1, SB2 und SB3 aufgeteilt, welche sich bezüglich ihrer Frequenzbreite voneinander unterscheiden.

Eine einmal erfolgte Aufteilung des Frequenzbandes F in Subbänder ist jedoch nicht konstant, sondern wird mit der Zeit geändert. Eine derartige Variation wird angeordnet durch die netzseitige Einrichtung NE der Figur 1, welche hierzu geeignete Mittel M1 aufweist. Diese Veränderung kann in Abhängigkeit von mehreren Einflussgrößen erfolgen. Beispiele hierfür sind Kanaleigenschaften, wie zum Beispiel die maximale Verzögerung bzw. die Kohärenzbandbreite als Maß für die Frequenzselektivität des Kanals, sowie der Grad an Mobilität der Mobilstationen. Im folgenden soll als Beispiel ein Frequenzband der Bandbreite von 20 MHz bei einer Frequenz von 5,5 GHz betrachtet werden.

Das erste Szenario stellt eine ländliche Umgebung dar, in welcher Geschwindigkeiten von Mobilfunkteilnehmern von bis zu 250 km/h auftreten können. Ein Mobilfunkkanal weist in einer ländlichen Umgebung in der Regel eine niedrige Verzögerung aufgrund von Mehrwegeausbreitung von zum Beispiel 2,5 μs auf, welches einer Kohärenzbandbreite von etwa 1,52 MHz entspricht. Die maximale Dopplerverschiebung bei der angegebenen Maximalgeschwindigkeit ergibt sich zu 1,27 kHz. In diesem ländlichen Szenario kann die Art der Aufteilung des 20 MHz Frequenzbandes derart bestimmt werden, dass lediglich 16 Subbänder mit einem Frequenzabstand von 1,25 MHz vorliegen. Trotz der Breite der Subbänder liegt eine relativ geringe Frequenzselektivität vor. Andererseits kann das Frequenzband auch in 128 äquidistante Subbänder aufgeteilt werden, wobei in diesem Fall trotz der hohen Anzahl an Subbändern die maximale Dopplerverschiebung weniger als ein Prozent des Subbandabstandes aufweist.

Als zweites Szenario soll eine städtische Umgebung betrachtet werden, wobei hier eine maximale Verzögerung von 10 μs aufgrund der starken Mehrwegeausbreitung angenommen werden kann, sowie eine maximale Geschwindigkeit der Mobilfunkteilnehmer, welche nicht höher als 60 km/h ist. Somit beträgt die Kohärenzbandbreite 380 kHz und die maximale Dopplerverschiebung 305 Hz. Hierfür ist eine Aufteilung des Frequenzbandes in zum Beispiel 64 Subbänder mit einem Frequenzabstand von 312 kHz möglich, oder eine Aufteilung in 512 Subbänder, wobei in diesem Fall die Dopplerverschiebung wiederum weniger als ein Prozent des Frequenzabstandes der 512 Subbänder beträgt.

Aufgrund der variablen Aufteilung eines Frequenzbandes in Subbänder kann ein Kompromiss gefunden werden zwischen der gegenseitigen Interferenz der einzelnen Subbänder durch den Dopplereffekt und einer zeitlichen Verzerrung aufgrund der Mehrwegeausbreitung. Dieser Kompromiss wird dadurch möglich, dass in die Entscheidung über die Aufteilung des Frequenzbandes in Subbänder die Ausbreitungsbedingungen, d.h. die Kanaleigenschaften, und das Mobilitätsszenario in der betrachteten Mobilfunkzelle miteinbezogen werden.

Figur 3 zeigt eine Anordnung zur Versendung von Daten gemäß einem Filter-Bank-Multi-Carrier Verfahren, welches zur Durchführung der senderseitigen Verfahrensschritte des oben beschriebenen Verfahrens eingesetzt werden kann. Die Daten $a_1$, $a_2$ usw. bis aN werden auf die einzelnen Subbänder SB1, SB2 usw. bis SBN verteilt, wobei die Aufteilung des verwendeten Frequenzbandes in die Subträger SB1, SB2 usw. bis SBN mit der Zeit nicht konstant ist. Es erfolgt eine Abtastung der Datenströme mit der Rate M, d.h., jedes Bit des Datenstroms wird M mal abgetastet. Daraufhin wird auf jedem Subband jeweils eine Filterfunktion $H_1$, $H_2$ usw. $H_N$ angewandt, wobei sich diese Filterfunktion für die einzelnen Subbänder voneinander unterscheiden kann. So ist es zum Beispiel für ein Subband, welches von einer schnell bewegten Mobilstation verwendet wird, von Vorteil, eine Filterfunktion anzuwenden, welche im Frequenzbereich stark lokalisiert ist, um eine gute spektrale Trennung zu den benachbarten Subbändern herzustellen. Hingegen bedeutet in Bezug auf die Subbänder von langsam bewegten Mobilstationen eine starke spektrale Einschränkung der Filterfunktion im Frequenzbereich einen Verlust von zur Verfügung stehender Bandbreite, und somit eine nicht effiziente Ausnutzung der zur Verfügung stehenden Funkressourcen. Überdies ist die empfängerseitige Verarbeitung des Signals umso aufwendiger, je schmaler die Filterfunktion im Frequenzbereich ist. Im Anschluss an die Anwendung der Filterfunktion auf den Datenstrom findet die Modulation des Datenstroms auf die jeweiligen Subbänder SB1, SB2 usw. bis SBN statt. Das summierte Signal wird daraufhin an den Empfänger übertragen.

Bei dem beschriebenen Mehrträgeverfahren kann die Abtastrate M verschieden eingestellt werden. Übersteigt die Abtastrate M die Anzahl der Subbänder N, so beträgt der Abstand zwischen den Subbändern $\frac{M}{N \cdot T}$, wobei T die Dauer eines Bits der Daten $a_1$, $a_2$ usw. bis $a_N$ darstellt. Hierdurch kann zusätzlich die tatsächliche Ausnutzung der verfügbaren Bandbreite der Subbänder in Abhängigkeit der Kanaleigenschaften und der Teilnehmermobilität verbessert bzw. gegebenenfalls verringert werden.

Werden für alle Filterfunktionen $H_1$, $H_2$ usw. bis $H_N$ die gleichen Funktionen verwendet, so kann das beschriebene Verfahren in dem Fall, dass die Abtastrate der Anzahl an Subbändern entspricht, bei Verwendung einer Exponentialfunktion als Filterfunktion im Frequenzbereich bzw. einer Rechteckfunktion im Zeitbereich als OFDM-Verfahren realisiert werden. Ferner können bei der Anwendung beliebiger aber gleicher Fil-

terfunktionen $H_1$, $H_2$ usw. bis $H_N$ aufwandgünstige Implementierungen des erfindungsgemäßen Mehrträgerübertragungsverfahrens realisiert werden, indem entweder nur ein Filter implementiert wird und alle auf unterschiedlichen Subbändern zu übertragenden gefilterten Datenströme auf unterschiedliche Subträger moduliert werden, oder indem die Filterung durch ein einziges im Frequenzbereich verschobenes Prototyp-Filter erreicht wird. Die Veränderung der Abtastrate M sollte dann für alle Subbänder gleich sein und wirkt sich dementsprechend auch gleichermaßen auf allen Subbändern aus. Als besonders vorteilhaft erweist sich hierbei die Verwendung eines Root Raised Cosine (rrcos)-Filters. Dies führt zu einer besonders effizienten Ausnutzung des Frequenzbandes.

Einer Mobilstation kann sowohl ein einzelnes Subband zur Kommunikation zugewiesen werden, als auch eine Mehrzahl an Subbändern. Hierdurch ist es möglich, dass in einer Funkzelle gleichzeitig sowohl einfache Mobilstationen, welche lediglich auf einem einzelnen Subband kommunizieren können, und komplexere Mobilstationen, welche auf mehreren Subbändern kommunizieren können, kommunizieren.

## Patentansprüche

1. Verfahren zur Kommunikation zwischen Funkstationen (MS1, MS2, BS) eines Funkkommunikationssystems unter Verwendung von mindestens einem in eine Anzahl von Subbändern (SB1, SB2, SB3, SB4) aufgeteilten Frequenzband (F),
**dadurch gekennzeichnet,**
**dass** die Art der Aufteilung des mindestens einen Frequenzbandes (F) in Subbänder (SB1, SB2, SB3, SB4) mit der Zeit variiert.

2. Verfahren nach Anspruch 1,
**dadurch gekennzeichnet,**
**dass** die Variation die Anzahl der Subbänder (SB1, SB2, SB3, SB4) des Frequenzbandes (F) betrifft.

3. Verfahren nach Anspruch 1 oder 2,
**dadurch gekennzeichnet,**
**dass** die Variation die Frequenzbreite von mindestens zwei Subbändern (SB1, SB2, SB3, SB4) betrifft.

4. Verfahren nach einem der Ansprüche 1 bis 3,
**dadurch gekennzeichnet,**
**dass** zur Datenübertragung auf Subbändern (SB1, SB2, SB3, SB4) verwendete Filterfunktionen ($H_1$, $H_2$, $H_N$) mit der Zeit variieren.

5. Verfahren nach Anspruch 4,
**dadurch gekennzeichnet,**
**dass** sich zumindest zeitweise mindestens zwei auf Subbändern (SB1, SB2, SB3, SB4) verwendete Filterfunktionen ($H_1$, $H_2$, $H_N$) voneinander unterscheiden.

6. Verfahren nach einem der Ansprüche 1 bis 5,
**dadurch gekennzeichnet,**
**dass** die Variation der Art der Aufteilung und gegebenenfalls der Filterfunktionen ($H_1$, $H_2$, $H_N$) in Abhängigkeit von Funkkanaleigenschaften und/oder von Parametern von mindestens einer Funkstation (MS1, MS2) und/oder von der erwünschten Granularität einer Datenübertragung erfolgt.

7. Verfahren zur Übertragung von Daten ($a_1$, $a_2$, $a_N$) zwischen einem Sender (MS1, MS2) und einem Empfänger (BS) in einem Funkkommunikationssystem,
wobei die Daten ($a_1$, $a_2$, $a_N$) auf einer Anzahl von Subbändern (SB1, SB2, SB3, SB4) eines in Subbänder (SB1, SB2, SB3, SB4) aufgeteilten Frequenzbandes (F) übertragen werden,
**dadurch gekennzeichnet,**
**dass** die senderseitig zur Übertragung verwendete Frequenzbreite von mindestens einem Subband (SB1, SB2, SB3, SB4) der Anzahl von Subbändern (SB1, SB2, SB3, SB4) und gegebenenfalls zusätzlich die Anzahl der Subbänder (SB1, SB2, SB3, SB4) während der Übertragung der Daten ($a_1$, $a_2$, $a_N$) variiert.

8. Einrichtung (NE) in einem Funkkommunikationssystem mit Mitteln (M1) zur Festlegung der Aufteilung von mindestens einem zur Kommunikation zwischen Funkstationen (MS1, MS2, BS) verwendeten Frequenzband (F) in Subbänder (SB1, SB2, SB3, SB4) derart,
dass die Art der Aufteilung des Frequenzbandes (F) in Subbänder (SB1, SB2, SB3, SB4) mit der Zeit variiert.

9. Einrichtung (MS1, MS2) zur Versendung von Daten ($a_1$, $a_2$, aN) in einem Funkkommunikationssystem, mit Mitteln (M2) zum Versenden der Daten ($a_1$, $a_2$, $a_N$) auf einer Anzahl von Subbändern (SB1, SB2, SB3, SB4) eines in Subbänder (SB1, SB2, SB3, SB4) aufgeteilten Frequenzbandes (F) derart,
dass die von der Einrichtung (MS1, MS2) verwendete Frequenzbreite von mindestens einem Subband (SB1, SB2, SB3, SB4) der Anzahl von Subbändern (SB1, SB2, SB3, SB4) und gegebenenfalls zusätzlich die Anzahl der verwendeten Subbänder (SB1, SB2, SB3, SB4) mit der Zeit variiert.

10. Einrichtung (BS) zum Empfangen von Daten ($a_1$, $a_2$, $a_N$) in einem Funkkommunikationssystem,
mit Mitteln (M3) zum Empfangen von auf einer gegebenenfalls zeitlich variierenden Anzahl von Subbändern (SB1, SB2, SB3, SB4) mit zumindest teilweise mit der Zeit variierender Frequenzbreite eines in Subbänder (SB1, SB2, SB3, SB4) aufgeteilten Frequenzbandes (F) übertragenen Daten ($a_1$, $a_2$, $a_N$) .

FIG 1

FIG 3

# FIG 2

Europäisches
Patentamt

**EUROPÄISCHER RECHERCHENBERICHT**

Nummer der Anmeldung

EP 03 01 0935

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| X | US 5 680 388 A (KAAHRE RAGNAR) 21. Oktober 1997 (1997-10-21) * Spalte 1, Zeile 13 - Zeile 19 * * Spalte 1, Zeile 56 - Zeile 62; Abbildung 1 * * Spalte 3, Zeile 22 - Zeile 32; Abbildung 1 * * Spalte 3, Zeile 66 - Spalte 4, Zeile 11 * * Spalte 4, Zeile 66 - Spalte 5, Zeile 4 * * Spalte 5, Zeile 24 - Zeile 28 * * Spalte 3, Zeile 40 - Zeile 47 * | 1-5,7-10 | H04L27/26 |
| Y | --- | 6 | |
| Y | WO 03 036849 A (BOLINTH EDGAR ;KERN RALF (DE); SIEMENS AG (DE)) 1. Mai 2003 (2003-05-01) * Seite 1, Zeile 25 - Zeile 35 * * Seite 2, Zeile 25 - Zeile 29; Abbildung 4 * | 6 | |
| A | --- EP 0 786 890 A (SONY CORP) 30. Juli 1997 (1997-07-30) * das ganze Dokument * | 1-5,7-10 | RECHERCHIERTE SACHGEBIETE (Int.Cl.7) H04L H04J H04Q |
| A | --- EP 1 115 221 A (SUMITOMO ELECTRIC INDUSTRIES) 11. Juli 2001 (2001-07-11) * das ganze Dokument * | 5 | |
| A | --- US 2003/064729 A1 (YAMASHITA ATSUSHI) 3. April 2003 (2003-04-03) * das ganze Dokument * | 5 | |
| A | --- US 5 790 516 A (ANDERSON PER-OLOF ET AL) 4. August 1998 (1998-08-04) * das ganze Dokument * ----- | 5 | |

Der vorliegende Recherchenbericht wurde für alle Patentansprüche erstellt

| Recherchenort | Abschlußdatum der Recherche | Prüfer |
|---|---|---|
| BERLIN | 11. September 2003 | BITTERMANN, J |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 01 0935

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5680388 | A | 21-10-1997 | SE | 470038 B | 25-10-1993 |
| | | | DE | 69330964 D1 | 22-11-2001 |
| | | | DE | 69330964 T2 | 20-06-2002 |
| | | | EP | 0676105 A1 | 11-10-1995 |
| | | | SE | 9203384 A | 25-10-1993 |
| | | | WO | 9411961 A1 | 26-05-1994 |
| WO 03036849 | A | 01-05-2003 | WO | 03036849 A1 | 01-05-2003 |
| EP 0786890 | A | 30-07-1997 | JP | 9205411 A | 05-08-1997 |
| | | | AU | 710869 B2 | 30-09-1999 |
| | | | AU | 1234997 A | 07-08-1997 |
| | | | CN | 1169070 A ,B | 31-12-1997 |
| | | | EP | 0786890 A2 | 30-07-1997 |
| | | | SG | 64963 A1 | 25-05-1999 |
| | | | US | 6400679 B1 | 04-06-2002 |
| EP 1115221 | A | 11-07-2001 | JP | 3127918 B2 | 29-01-2001 |
| | | | JP | 2001028577 A | 30-01-2001 |
| | | | EP | 1115221 A1 | 11-07-2001 |
| | | | WO | 0106689 A1 | 25-01-2001 |
| US 2003064729 | A1 | 03-04-2003 | JP | 2003070055 A | 07-03-2003 |
| US 5790516 | A | 04-08-1998 | AU | 725718 B2 | 19-10-2000 |
| | | | AU | 6473796 A | 18-02-1997 |
| | | | BR | 9609561 A | 02-03-1999 |
| | | | CA | 2226723 A1 | 06-02-1997 |
| | | | CN | 1195442 A | 07-10-1998 |
| | | | EP | 0839423 A1 | 06-05-1998 |
| | | | FI | 980048 A | 13-03-1998 |
| | | | JP | 11509390 T | 17-08-1999 |
| | | | WO | 9704572 A1 | 06-02-1997 |

EPO FORM P0461

Für nähere Einzelheiten zu diesem Anhang : siehe Amtsblatt des Europäischen Patentamts, Nr.12/82